# EUROPEAN PATENT APPLICATION

(11) **EP 4 250 443 A1**
(43) Date of publication of application: **27.09.2023**
(21) Application number: 20961901.4
(22) Date of filing: 18.11.2020
(51) Int. Cl.: H01M 50/143

(54) **BATTERY COVER PLATE AND LITHIUM ION SECONDARY BATTERY**

(71) Applicant: Microvast Power Systems Co., Ltd., Huzhou, Zhejiang 313000 (CN); Microvast, Inc., Stafford, TX 77477 (US)
(72) Inventor: DENG, Guoyou, Huzhou, Zhejiang 313000 (CN); JIN, Yong, Huzhou, Zhejiang 313000 (CN); SHEN, Xiaojie, Huzhou, Zhejiang 313000 (CN); ZANG, Qingfeng, Huzhou, Zhejiang 313000 (CN); ZHANG, Junli, Huzhou, Zhejiang 313000 (CN)
(74) Representative: Zaboliene, Reda
(86) International application number: PCT/CN2020/129889
(87) International publication number: WO 2022/104610

(57) **Abstract**

A battery cover plate (2) and a lithium-ion secondary battery (1). An electrode terminal (5) is provided on the battery cover plate (2), an explosion-proof notch (7) is also provided on the battery cover plate (2), and the explosion-proof notch (7) surrounds or partially surrounds the electrode terminal (5). By providing the explosion-proof notch (7) on the battery cover plate (2), the battery cover plate (2) can burst or explode from the explosion-proof notch (7) in the case of battery abnormality, and the battery can be quickly released, thereby achieving the explosion-proof function of the battery. Moreover, the explosion-proof notch (7) surrounds or partially surrounds the periphery of the electrode terminal (5), so that the battery cover plate (2) can drive the electrode terminal (5) to move together when the battery cover plate (2) bursts or explodes, and the movement of the electrode terminal (5) pulls a tab (6), so that the tab (6) or the junction of the tab (6) can be partially broken or completely broken, thereby weakening or blocking the electric connection between the electrode terminal (5) and a cell (4), and effectively inhibiting the continuous production of heat inside the battery.

## Description

### BACKGROUND OF THE APPLICATION

### Field of the Application

The present application relates to the technical field of battery technology, and in particular, to a battery cover plate and a lithium-ion secondary battery.

### Description of Related Art

With the application and widespread promotion of electric vehicles, batteries, as the core components of electric vehicles, have put forward higher requirements for the safety performance of batteries.

Lithium-ion batteries are widely used due to their high energy density and long service life. However, when the battery cells inside the battery abnormally generate a large amount of heat, the chemical reaction inside the battery intensifies, thus producing a large amount of gas. The internal pressure of the battery increases sharply, posing a risk of thermal runaway of the battery and even leading to battery explosion.

At present, the shell of prismatic lithium-ion batteries mainly includes a casing and a battery cover plate. To prevent battery explosion, one method is to install an explosion-proof valve on the battery cover plate. When the pressure inside the battery increases to the bursting pressure, the explosion-proof valve bursts to relieve pressure, thereby avoiding the risk of battery explosion. However, the method of installing the explosion-proof valve on the battery cover plate has the problem of complex process and high cost.

Another method is to set a groove on the battery casing, which means using mechanical methods to press an indentation on the surface of the casing. When the internal pressure of the battery increases, it guides the casing of the battery to break from the groove, thus achieving the purpose of explosion-proof.

The above two methods can achieve the purpose of pressure relief when the internal pressure of the battery increases to a certain extent, but after pressure relief, the battery and external electrical components are still in a normal electrical connection state, which fails to effectively prevent the continuous heat generation inside the battery.

### BRIEF SUMMARY OF THE APPLICATION

The object of this application is to provide a battery cover plate and a lithium-ion secondary battery, aiming to solve the shortcomings of the background technology mentioned above. It can not only achieve the explosion-proof function of the battery, but also weaken or cut off the electrical connection between the electrode terminal and the battery cell, thus effectively inhibiting the continuous heat generation inside the battery.

An embodiment of the present application provides a battery cover plate, an electrode terminal is provided on the battery cover plate, wherein an explosion-proof groove is also provided on the battery cover plate, and the explosion-proof groove surrounds or is set partially around the electrode terminal.

In an achievable way, the number of the electrode terminal is two, namely a first electrode terminal and a second electrode terminal, and both the first electrode terminal and the second electrode terminal are set on the battery cover plate.

In an achievable manner, the explosion-proof groove surrounds or is set partially around one of the electrode terminals, or the explosion-proof groove surrounds or is set partially around both the first electrode terminal and the second electrode terminal.

In an achievable way, the number of the explosion-proof groove is two, namely a first explosion-proof groove and a second explosion-proof groove, the first explosion-proof groove surrounds or is set partially around the first electrode terminal, and/or the second explosion-proof groove surrounds or is set partially around the second electrode terminal.

In an achievable manner, the explosion-proof groove is a closed annular structure, or is a U-shaped or C-shaped structure with an opening.

In an achievable way, the depth of the explosion-proof groove is 5%-95% of the thickness of the battery cover plate, or the depth of the explosion-proof groove is 30%-90% of the thickness of the battery cover plate, or the depth of the explosion-proof groove is 50%-85% of the thickness of the battery cover plate.

Another embodiment of the present application also provides a lithium-ion secondary battery comprising a shell and a battery cover plate, a battery cell is packaged in the shell, one end of the shell is provided with an opening, the battery cover plate seals the opening, an electrode terminal is provided on the battery cover plate, wherein an explosion-proof groove is also provided on the battery cover plate, and the explosion-proof groove surrounds or is set partially around the electrode terminal.

In an achievable way, the number of the electrode terminal is two, namely a first electrode terminal and a second electrode terminal, and both the first electrode terminal and the second electrode terminal are set on the battery cover plate.

In an achievable manner, the explosion-proof groove surrounds or is set partially around one of the electrode terminals, or the explosion-proof groove surrounds or is set partially around both the first electrode terminal and the second electrode terminal.

In an achievable way, the number of the explosion-proof groove is two, namely a first explosion-proof groove and a second explosion-proof groove, the first explosion-proof groove surrounds or is set partially around the first electrode terminal, and/or the second explosion-proof groove surrounds or is set partially around the second electrode terminal.

In an achievable manner, the explosion-proof groove is a closed annular structure, or is a U-shaped or C-shaped structure with an opening.

In an achievable way, a tab is provided in the shell, and the electrode terminal is electrically connected to the battery cell through the tab, one end of the tab is connected to the battery cell, and the other end of the tab is connected to the electrode terminal, and at least a cutout is provided on the tab.

In an achievable manner, two opposite ends of the shell are each provided with the opening, and the number of the battery cover plate is two, namely a first battery cover plate and a second battery cover plate, the first battery cover plate seals the opening at one end of the shell, the second battery cover plate seals the opening at the other end of the shell, and the explosion-proof groove is set on the first battery cover plate and/or the second battery cover plate.

In the battery cover plate of the present application, an explosion-proof groove is provided on the battery cover, so that the battery cover plate can burst or explode along the explosion-proof groove in the case of abnormal battery conditions, and the battery can quickly release pressure, thereby achieving the explosion-proof function of the battery. Meanwhile, the explosion-proof groove surrounds or is set partially around the electrode terminal, so that the battery cover plate can drive the electrode terminal to move together when the battery cover plate bursts or explodes, and the electrode terminal will leave from its original position and move away from the battery cell. The movement of the electrode terminal will pull the tab, so that the tab or the junction of the tab (including the junction between the tab and the electrode terminal, or the junction between the tab and an electrode plate of the battery cell) is partially broken or completely broken, thereby weakening or cutting off the electrical connection between the electrode terminal and the battery cell, that is, weakening or cutting off the electrical connection between the external electrical components and the battery cell, thus effectively inhibiting the continuous heat generation inside the battery and improving the safety performance of the battery.

### BRIEF DESCRIPTION OF THE DRAWINGS

FIG. 1 is a schematic diagram of the structure of the battery cover plate in an embodiment of the present application.
FIG. 2 is a cross-sectional schematic diagram of FIG. 1 along the A-A position.
FIG. 3 is a schematic diagram of the structure of the battery cover plate in another embodiment of the present application.
FIG. 4 is a schematic diagram of the structure of the lithium-ion secondary battery in an embodiment of the present application.
FIG. 5 is an exploded, schematic diagram of the lithium-ion secondary battery in FIG. 4.
FIG. 6 is a schematic diagram of the partial internal structure of the lithium-ion secondary battery in FIG. 4.
FIG. 7 is an exploded, schematic diagram of the lithium-ion secondary battery in another embodiment of the present application.
FIG. 8 is a schematic diagram of the structure of the battery cover plate in another embodiment of the present application.
FIG. 9 is a schematic diagram of the structure of the battery cover plate in another embodiment of the present application.
FIG. 10 is a schematic diagram of the structure of the battery cover plate in another embodiment of the present application.
FIG. 11 is a schematic diagram of the structure of the battery cover plate in another embodiment of the present application.
FIG. 12 is a schematic diagram of the structure of the battery cover plate in another embodiment of the present application.
FIG. 13 is a schematic diagram of the structure of the battery cover plate in another embodiment of the present application.
FIG. 14 is a schematic diagram of the structure of the lithium-ion secondary battery in another embodiment of the present application.

### DETAILED DESCRIPTION OF THE APPLICATION

The following will provide a further detailed description of the specific implementation method of this application in conjunction with the accompanying drawings and embodiments. The following embodiments are used to illustrate the present application, but are not intended to limit the scope of the present application.

The terms "first", "second", "third", "fourth", etc. (if any) in the specification and claims of this application are used to distinguish similar objects and do not need to be used to describe a specific sequence or order.

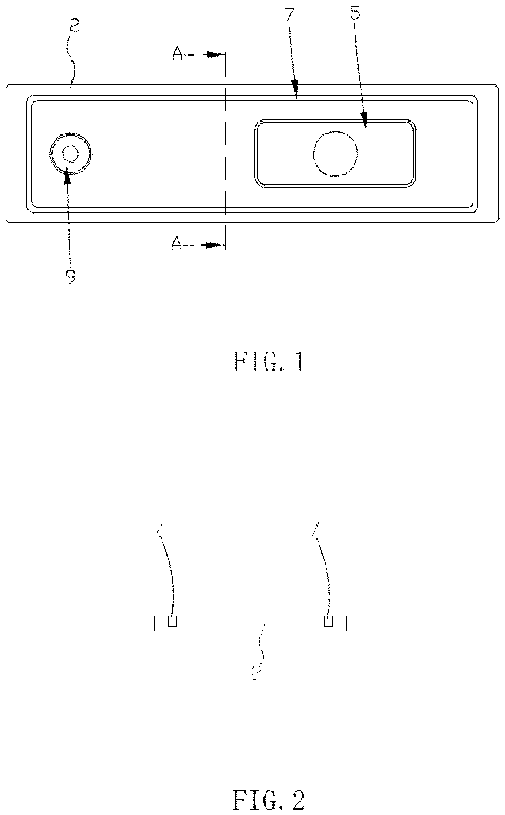

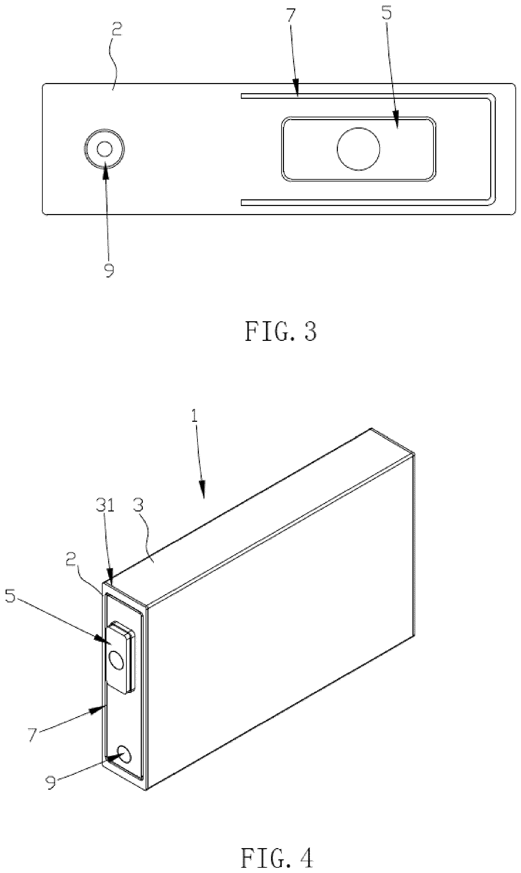

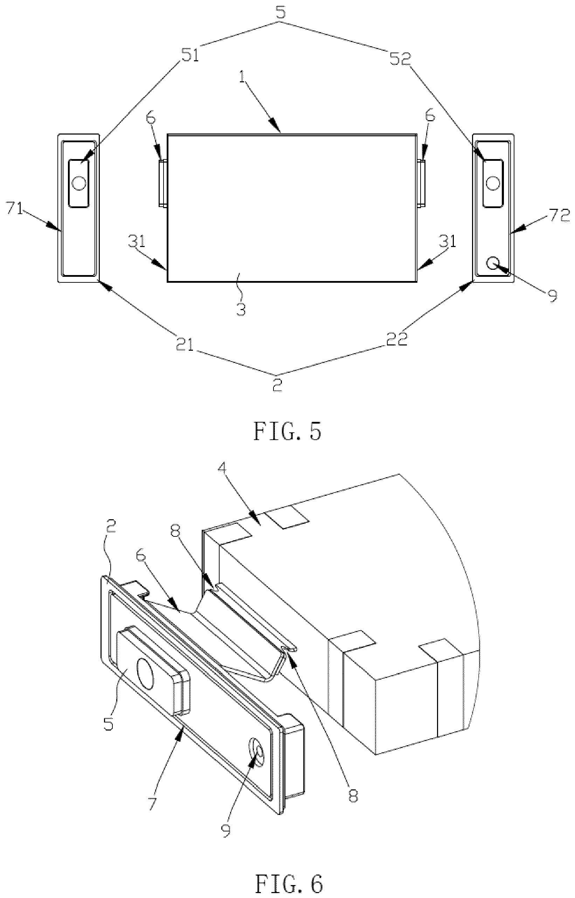

As shown in FIGs. 1 and 2, an embodiment of the present application provides a battery cover plate 2, particularly suitable for prismatic lithium-ion batteries. The battery cover plate 2 is provided on the shell 3, and a battery cell 4 is packaged in the shell 3. An electrode terminal 5 is provided on the battery cover plate 2, and the electrode terminal 5 is electrically connected to the battery cell 4 through a tab 6. One end of the tab 6 is connected to the battery cell 4, and the other end of the tab 6 is connected to the electrode terminal 5 (the structures of the shell 3, the battery cell 4, and the tab 6 can be seen in FIGs. 4 to 6). An explosion-proof groove 7 is also provided on the battery cover plate 2. The explosion-proof groove 7 is an indentation formed by pressing on the surface of the battery cover plate 2 using mechanical methods. The explosion-proof groove 7 surrounds the electrode terminal 5, that is, the explosion-proof groove 7 is set around the whole electrode terminal 5.

Specifically, in the above embodiment, the battery cover plate 2 is provided with one electrode terminal 5, and the electrode terminal 5 is fixed on the battery cover plate 2. The electrode terminal 5 is used for the electrical connection between the battery cell 4 and external electrical components (not shown). The battery cover plate 2 is used to seal the shell 3, so that the battery cell 4 is packaged inside the shell 3.

In the above embodiment, the battery cover plate 2 is also provided with a liquid injection hole 9, and the liquid injection hole 9 is used for injecting electrolyte into the shell 3.

In the above embodiment, the explosion-proof groove 7 is set on the outer surface of the battery cover plate 2. Of course, in other embodiments, the explosion-proof groove 7 can also be set on the inner surface of the battery cover plate 2, or be set on both the outer surface of the battery cover plate 2 and the inner surface of the battery cover plate 2, and it is not limited herein.

In the above embodiment, the explosion-proof groove 7 is a rectangular structure, that is, in the form of a closed annular structure. Specifically, the closed annular structure can also be circular, triangular, and other shapes, and it is not limited herein.

As shown in FIG. 3, another embodiment of the present application provides a battery cover plate 2. Unlike the above embodiment, the explosion-proof groove 7 is a U-shaped structure with an opening, and the explosion-proof groove 7 is set partially around the electrode terminal 5, that is, the explosion-proof groove 7 does not surround the electrode terminal 5. Of course, in other embodiments, the explosion-proof groove 7 can also be C-shaped, L-shaped, and other shapes, and it is not limited herein.

When the battery cell 4 inside the battery abnormally generates a large amount of heat, the chemical reaction inside the battery intensifies, thus producing a large amount of gas. The internal pressure of the battery increases sharply, posing a risk of thermal runaway of the battery and even leading to battery explosion. In the embodiments of this application, an explosion-proof groove 7 is set on the battery cover plate 2, so that the battery cover plate 2 can burst or explode along the explosion-proof groove 7 in the case of abnormal battery conditions, and the battery can quickly release pressure, thereby achieving the explosion-proof function of the battery. Meanwhile, the explosion-proof groove 7 surrounds or is set partially around the electrode terminal 5, so that the battery cover plate 2 can drive the electrode terminal 5 to move together when the battery cover plate 2 bursts or explodes. The electrode terminal 5 will leave from its original position and move away from the battery cell 4. The movement of the electrode terminal 5 will pull the tab 6, so that the tab 6 or the junction of the tab 6 (including the junction between the tab 6 and the electrode terminal 5, or the junction between the tab 6 and an electrode plate of the battery cell 4) is partially broken or completely broken, thereby weakening (the resistance will increase after the tab 6 is partially broken) or cutting off the electrical connection between the electrode terminal 5 and the battery cell 4, that is, weakening or cutting off the electrical connection between the external electrical components and the battery cell 4, thus effectively inhibiting the continuous heat generation inside the battery and improving the safety performance of the battery.

In the above embodiments, the depth of the explosion-proof groove 7 is 50% -85% of the thickness of the battery cover plate 2. Of course, the depth of the explosion-proof groove 7 can also be designed according to actual needs.

Specifically, the overall shape of the explosion-proof groove 7 can be designed based on the shape of the electrode terminal 5 or the shape of the battery cover plate 2. For example, the shape of the electrode terminal 5 is rectangular, and the explosion-proof groove 7 is also designed to have a rectangular structure. The shape, size, depth, and width of the explosion-proof groove 7 can be designed based on the critical burst pressure of the battery. For example, when the critical burst pressure of the battery is low, in order to ensure the safety performance of the battery, it is necessary to burst or explode the battery cover plate 2 when the internal pressure of the battery is low. However, under the low internal pressure of the battery, the battery cover plate 2 is not easy to burst or explode. Accordingly, the explosion-proof groove 7 can be designed closer to a circular structure, making it easier for the battery cover plate 2 to burst or explode along the explosion-proof groove 7. For example, when the explosion-proof groove 7 is designed to have an L-shaped structure, the battery cover plate 2 will not burst or explode under the critical burst pressure of the battery; when the explosion-proof groove 7 is designed to have a U-shaped structure, the battery cover plate 2 will burst or explode in order to meet actual needs. Alternatively, the explosion-proof groove 7 can be designed to be larger. Under the same pressure, the larger the applied force area of the battery cover plate 2 within the range of the explosion-proof groove 7, the greater the pressure that the explosion-proof groove 7 bears, so that the battery cover plate 2 is more likely to burst or explode along the explosion-proof groove 7. Alternatively, the depth of the explosion-proof groove 7 can be designed deeper or the width of the explosion-proof groove 7 can be designed wider, so that the strength of the battery cover plate 2 at the explosion-proof groove 7 is lower, making it easier for the battery cover plate 2 to burst or explode along the explosion-proof groove 7. Herein, there are no restrictions on the shape, size, and depth of the explosion-proof groove 7.

As shown in FIGs. 4 to 6, another embodiment of the present application provides a lithium-ion secondary battery 1, particularly a prismatic lithium-ion secondary battery. The lithium-ion secondary battery 1 includes a shell 3 and a battery cover plate 2. A battery cell 4 is packaged in the shell 3.

In the above embodiment, two opposite ends of the shell 3 are provided with openings 31, and the number of the battery cover plate 2 is two, namely a first battery cover plate 21 and a second battery cover plate 22. The first battery cover plate 21 seals the opening 31 at one end of the shell 3, and the second battery cover plate 22 seals the opening 31 at the other end of the shell 3.

In the above embodiment, an electrode terminal 5 is provided on the battery cover plate 2, and the number of the electrode terminal 5 is two, namely a first electrode terminal 51 and a second electrode terminal 52. The first electrode terminal 51 is set on the first battery cover plate 21, and the second electrode terminal 52 is set on the second battery cover plate 22. The first electrode terminal 51 is connected to one end of the battery cell 4, and the second electrode terminal 52 is connected to the other end of the battery cell 4.

Specifically, the battery cell 4 has a positive electrode and a negative electrode. In the above embodiment, the positive and negative electrodes of the battery cell 4 are located at opposite ends of the battery cell 4, with one of the first electrode terminal 51 and the second electrode terminal 52 electrically connected to the positive electrode of the battery cell 4, and the other electrically connected to the negative electrode of the battery cell 4.

In the above embodiment, both the first battery cover plate 21 and the second battery cover plate 22 are each provided with the explosion-proof groove 7. The number of the explosion-proof groove 7 is two, namely a first explosion-proof groove 71 and a second explosion-proof groove 72. The first explosion-proof groove 71 surrounds the first electrode terminal 51, and the second explosion-proof groove 72 surrounds the second electrode terminal 52. Of course, in other embodiments, the first explosion-proof groove 71 can be set to surround or be set partially around the first electrode terminal 51, and the second explosion-proof groove 72 can be set to surround or be set partially around the second electrode terminal 52, and it is not limited herein.

In the above embodiment, the explosion-proof groove 7 is a rectangular structure, that is, in the form of a closed annular structure. Specifically, the closed annular structure can also be circular, triangular, and other shapes. Of course, in other embodiments, the explosion-proof groove 7 can also be a U-shaped, C-shaped, or L-shaped structure with an opening, and it is not limited herein.

In the above embodiment, a tab 6 is provided in the shell 3, and the electrode terminal 5 is electrically connected to the battery cell 4 through the tab 6. One end of the tab 6 is connected to the battery cell 4, and the other end of the tab 6 is connected to the electrode terminal 5. The number of the tab 6 is two, with one tab 6 connected between the first electrode terminal 51 and the battery cell 4, and the other tab 6 connected between the second electrode terminal 52 and the battery cell 4. At least a cutout 8 is provided on each tab 6.

In the above embodiment, each tab 6 is provided with two cutouts 8, and the two cutouts 8 are symmetrically arranged on two opposite lateral sides of each tab 6. Of course, in other embodiments, more cutouts 8 can also be set on each tab 6, such as three, four, etc., and it is not limited herein.

Specifically, since the cutout 8 has a relatively small size, the impact of the cutout 8 on the conductivity of the tab 6 is very small. By setting a cutout 8 on the tab 6 connected to the electrode terminal 5, the tab 6 can be more easily pulled apart when the tab 6 is pulled by the electrode terminal 5 after the battery cover plate 2 bursts or explodes, thereby promoting the formation of an open circuit within the battery and effectively inhibiting the continuous heat generation inside the battery, thus further improving the safety performance of the battery.

In the above embodiment, the first battery cover plate 21 and/or the second battery cover plate 22 are provided with a liquid injection hole 9.

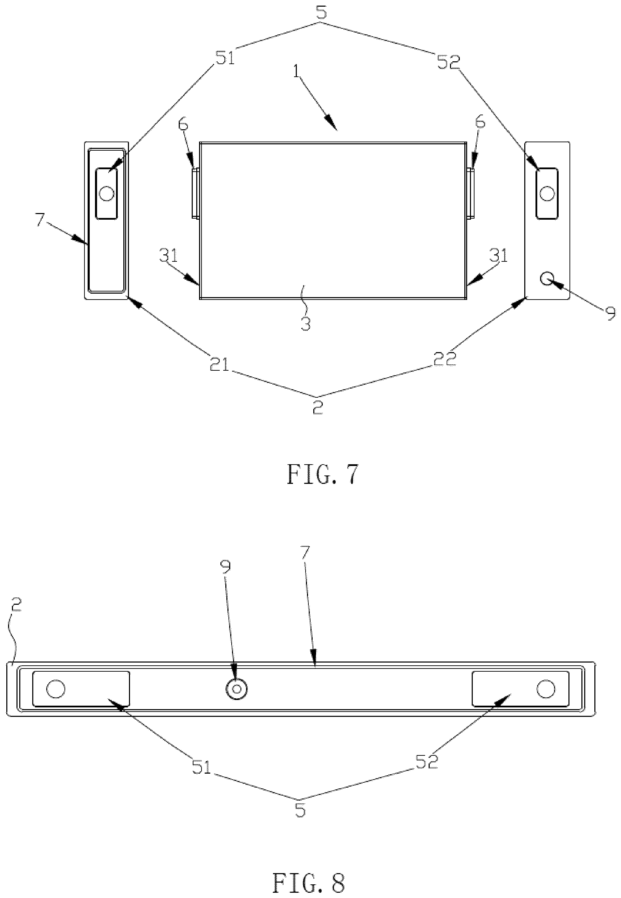

As shown in FIG. 7, another embodiment of the present application provides a lithium-ion secondary battery 1. Unlike the above embodiment, only one of the first battery cover plate 21 and the second battery cover plate 22 is provided with the explosion-proof groove 7, and the cutout 8 is only provided on the tab 6 connected to the electrode terminal 5 with the explosion-proof groove 7. Specifically, the explosion-proof groove 7 surrounds the first electrode terminal 51, and the cutout 8 is provided on the tab 6 connected to the first electrode terminal 51. Of course, in other embodiments, the explosion-proof groove 7 can also be set on one battery cover plate 2, and the explosion-proof groove 7 is set partially around the electrode terminal 5, and it is not limited herein.

As shown in FIG. 8, another embodiment of the present application provides a battery cover plate 2, and an electrode terminal 5 is provided on the battery cover plate 2. The number of the electrode terminal 5 is two, namely a first electrode terminal 51 and a second electrode terminal 52. The first electrode terminal 51 and the second electrode terminal 52 are both set on the battery cover plate 2.

In the above embodiment, an explosion-proof groove 7 is also provided on the battery cover plate 2, and the number of the explosion-proof groove 7 is one. The explosion-proof groove 7 is set to simultaneously surround the first electrode terminal 51 and the second electrode terminal 52.

In the above embodiment, the battery cover plate 2 is also provided with a liquid injection hole 9.

In the above embodiment, the explosion-proof groove 7 is a rectangular structure, that is, in the form of a closed annular structure. Specifically, the closed annular structure can also be circular, triangular, and other shapes. Of course, in other embodiments, the explosion-proof groove 7 can also be a U-shaped, C-shaped, or L-shaped structure with an opening, and it is not limited herein.

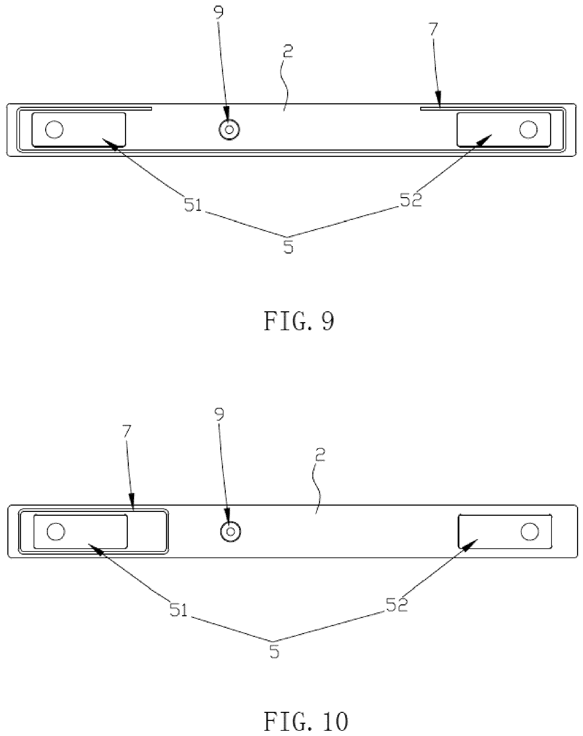

As shown in FIG. 9, another embodiment of the present application provides a battery cover plate 2. Unlike the above embodiment, the number of the explosion-proof groove 7 is one, and the explosion-proof groove 7 is set partially around both the first electrode terminal 51 and the second electrode terminal 52.

As shown in FIG. 10, another embodiment of the present application provides a battery cover plate 2. Unlike the above embodiment, the number of the explosion-proof groove 7 is one, and the explosion-proof groove 7 is set to surround one of the electrode terminals 5. Specifically, the explosion-proof groove 7 is set to surround the first electrode terminal 51.

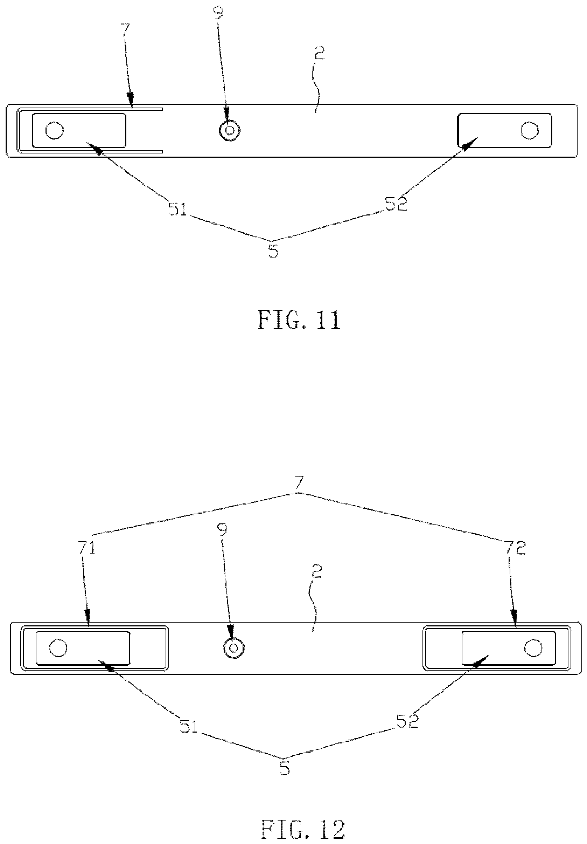

As shown in FIG. 11, another embodiment of the present application provides a battery cover plate 2. Unlike the above embodiment, the number of the explosion-proof groove 7 is one, and the explosion-proof groove 7 is set partially around one of the electrode terminals 5. Specifically, the explosion-proof groove 7 is set partially around the first electrode terminal 51.

As shown in FIG. 12, another embodiment of the present application provides a battery cover plate 2. Unlike the above embodiments, the number of the explosion-proof groove 7 is two, namely a first explosion-proof groove 71 and a second explosion-proof groove 72. The first explosion-proof groove 71 is set to surround the first electrode terminal 51, and the second explosion-proof groove 72 is set to surround the second electrode terminal 52.

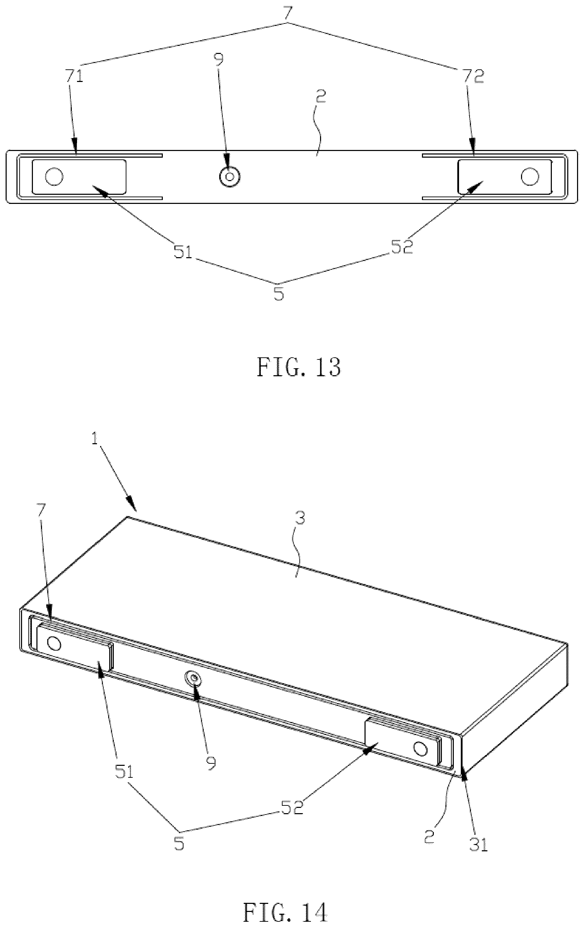

As shown in FIG. 13, another embodiment of the present application provides a battery cover plate 2. Unlike the above embodiment, the number of the explosion-proof groove 7 is two, namely a first explosion-proof groove 71 and a second explosion-proof groove 72. The first explosion-proof groove 71 is set partially around the first electrode terminal 51, and the second explosion-proof groove 72 is set partially around the second electrode terminal 52. Of course, in other embodiments, the first explosion-proof groove 71 can be set to surround the first electrode terminal 51, and the second explosion-proof groove 72 is set partially around the second electrode terminal 52; or alternatively, the first explosion-proof groove 71 can be set partially around the first electrode terminal 51, and the second explosion-proof groove 72 is set to surround the second electrode terminal 52, and it is not limited herein.

As shown in FIG. 14, another embodiment of the present application provides a lithium-ion secondary battery 1, particularly a prismatic lithium-ion battery. The lithium-ion secondary battery 1 includes a shell 3 and a battery cover plate 2. A battery cell 4 is packaged in the shell 3.

In the above embodiment, one end of the shell 3 is provided with an opening 31, and the battery cover plate 2 seals the opening 31.

In the above embodiment, there are two electrode terminals 5 on the battery cover plate 2, namely a first electrode terminal 51 and a second electrode terminal 52. The first electrode terminal 51 and the second electrode terminal 52 are both set on the battery cover plate 2. The positive and negative electrodes of the battery cell 4 are located at the same end of the battery cell 4. One of the first electrode terminal 51 and the second electrode terminal 52 is electrically connected to the positive electrode of the battery cell 4, and the other is electrically connected to the negative electrode of the battery cell 4.

In the above embodiment, the number of the explosion-proof groove 7 is one, and the explosion-proof groove 7 is set to simultaneously surround the first electrode terminal 51 and the second electrode terminal 52. Referring to FIG. 9, in other embodiments, the explosion-proof groove 7 can also be set partially around the first electrode terminal 51 and the second electrode terminal 52. Alternatively, the number of the explosion-proof groove 7 may be two (see FIGs. 12 and 13), namely a first explosion-proof groove 71 and a second explosion-proof groove 72. The first explosion-proof groove 71 surrounds or is set partially around the first electrode terminal 51, and the second explosion-proof groove 72 surrounds or is set partially around the second electrode terminal 52, and it is not limited herein.

In the above embodiment, the explosion-proof groove 7 is a rectangular structure, that is, in the form of a closed annular structure. Specifically, the closed annular structure can also be circular, triangular, and other shapes. Of course, in other embodiments, the explosion-proof groove 7 can also be a U-shaped, C-shaped, or L-shaped structure with an opening, and it is not limited herein.

In the above embodiment, a tab 6 is provided in the shell 3, and the electrode terminal 5 is electrically connected to the battery cell 4 through the tab 6. One end of the tab 6 is connected to the battery cell 4, and the other end of the tab 6 is connected to the electrode terminal 5. The number of the tab 6 is two, with one tab 6 connected between the first electrode terminal 51 and the battery cell 4, and the other tab 6 connected between the second electrode terminal 52 and the battery cell 4. At least one cutout 8 is provided on each tab 6.

In the above embodiment, the battery cover plate 2 is also provided with a liquid injection hole 9.

The advantages of the battery cover plate 2 and lithium-ion secondary battery 1 provided in the embodiments of the present application are as follows:
(1). The embodiments of the present application adopt the design of the explosion-proof groove 7, which is simpler in structure and process, and is lower in cost, as compared to the method of setting an explosion-proof valve on the battery cover plate 2.
(2). The embodiments of the present application adopt the design of the explosion-proof groove 7 which surrounds or is set partially around the electrode terminal 5, thus simplifying the design of the explosion-proof structure of the battery and making the spatial layout more concise. Meanwhile, when the battery cover plate 2 bursts or explodes, it can drive the electrode terminal 5 to move together, causing the electrode terminal 5 to leave from its original position and move away from the battery cell 4. The movement of the electrode terminal 5 will pull the tab 6, causing the tab 6 to be partially broken or completely broken, thereby weakening or cutting off the electrical connection between the electrode terminal 5 and the battery cell 4, that is, weakening or cutting off the electrical connection between the external electrical components and the battery cell 4, thus effectively inhibiting the continuous heat generation inside the lithium-ion secondary battery 1 and improving the explosion-proof effect of the lithium-ion secondary battery 1.
(3). The embodiments of the present application set a cutout 8 on the tab 6 connected to the electrode terminal 5 with the explosion-proof groove 7, the tab 6 can be more easily pulled apart when the tab 6 is pulled by the electrode terminal 5 after the battery cover plate 2 bursts or explodes, thereby promoting the formation of an open circuit within the battery and effectively inhibiting the continuous heat generation inside the battery, thus further improving the safety performance of the battery.

The above are only the specific embodiments of this application, but the scope of protection of this application is not limited to this. Any technical personnel familiar with this technical field who can easily think of changes or replacements within the scope of technology disclosed in this application should be covered within the scope of protection of this application. Therefore, the protection scope of this application should be based on the protection scope of the claims.

### Industrial applicability

In the battery cover plate of the present application, an explosion-proof groove is provided on the battery cover, so that the battery cover plate can burst or explode along the explosion-proof groove in the case of abnormal battery conditions, and the battery can quickly release pressure, thereby achieving the explosion-proof function of the battery. Meanwhile, the explosion-proof groove surrounds or is set partially around the electrode terminal, so that the battery cover plate can drive the electrode terminal to move together when the battery cover plate bursts or explodes, and the electrode terminal will leave from its original position and move away from the battery cell. The movement of the electrode terminal will pull the tab, so that the tab or the junction of the tab (including the junction between the tab and the electrode terminal, or the junction between the tab and an electrode plate of the battery cell) is partially broken or completely broken, thereby weakening or cutting off the electrical connection between the electrode terminal and the battery cell, that is, weakening or cutting off the electrical connection between the external electrical components and the battery cell, thus effectively inhibiting the continuous heat generation inside the battery and improving the safety performance of the battery.

## Claims

1. A battery cover plate, an electrode terminal (5) being provided on the battery cover plate (2), wherein an explosion-proof groove (7) is also provided on the battery cover plate (2), and the explosion-proof groove (7) surrounds or is set partially around the electrode terminal (5).

2. The battery cover plate as claimed in claim **1**, wherein the number of the electrode terminal (5) is two, namely a first electrode terminal (51) and a second electrode terminal (52), and both the first electrode terminal (51) and the second electrode terminal (52) are set on the battery cover plate (2).

3. The battery cover plate as claimed in claim **2**, wherein the explosion-proof groove (7) surrounds or is set partially around one of the electrode terminals (5), or the explosion-proof groove (7) surrounds or is set partially around both the first electrode terminal (51) and the second electrode terminal (52).

4. The battery cover plate as claimed in claim **2**, wherein the number of the explosion-proof groove (7) is two, namely a first explosion-proof groove (71) and a second explosion-proof groove (72), the first explosion-proof groove (71) surrounds or is set partially around the first electrode terminal (51), and/or the second explosion-proof groove (72) surrounds or is set partially around the second electrode terminal (52).

5. The battery cover plate as claimed in claim **1**, wherein the explosion-proof groove (7) is a closed annular structure, or is a U-shaped or C-shaped structure with an opening.

6. A lithium-ion secondary battery, comprising a shell (3) and a battery cover plate (2), a battery cell (4) being packaged in the shell (3), one end of the shell (3) being provided with an opening (31), the battery cover plate (2) sealing the opening (31), an electrode terminal (5) being provided on the battery cover plate (2), wherein an explosion-proof groove (7) is also provided on the battery cover plate (2), and the explosion-proof groove (7) surrounds or is set partially around the electrode terminal (5).

7. The lithium-ion secondary battery as claimed in claim **6**, wherein the number of the electrode terminal (5) is two, namely a first electrode terminal (51) and a second electrode terminal (52), and both the first electrode terminal (51) and the second electrode terminal (52) are set on the battery cover plate (2).

8. The lithium-ion secondary battery as claimed in claim **7**, wherein the explosion-proof groove (7) surrounds or is set partially around one of the electrode terminals (5), or the explosion-proof groove (7) surrounds or is set partially around both the first electrode terminal (51) and the second electrode terminal (52).

9. The lithium-ion secondary battery as claimed in claim **7**, wherein the number of the explosion-proof groove (7) is two, namely a first explosion-proof groove (71) and a second explosion-proof groove (72), the first explosion-proof groove (71) surrounds or is set partially around the first electrode terminal (51), and/or the second explosion-proof groove (72) surrounds or is set partially around the second electrode terminal (52).

10. The lithium-ion secondary battery as claimed in claim **6,** wherein the explosion-proof groove (7) is a closed annular structure, or is a U-shaped or C-shaped structure with an opening.

11. The lithium-ion secondary battery as claimed in claim **6**, wherein a tab (6) is provided in the shell (3), and the electrode terminal (5) is electrically connected to the battery cell (4) through the tab (6), one end of the tab (6) is connected to the battery cell (4), and the other end of the tab (6) is connected to the electrode terminal (5), and at least a cutout (8) is provided on the tab (6).

12. The lithium-ion secondary battery as claimed in claim **6**, wherein two opposite ends of the shell (3) are each provided with the opening (31), and the number of the battery cover plate (2) is two, namely a first battery cover plate (21) and a second battery cover plate (22), the first battery cover plate (21) seals the opening (31) at one end of the shell (3), the second battery cover plate (22) seals the opening (31) at the other end of the shell (3), and the explosion-proof groove (7) is set on the first battery cover plate (21) and/or the second battery cover plate (22).
